# EUROPEAN PATENT APPLICATION

(11) **EP 1 625 949 A1**
(43) Date of publication of application: **15.02.2006**
(21) Application number: 04425623.8
(22) Date of filing: 09.08.2004
(51) Int. Cl.: B60C 11/00, B60C 15/024

(54) **Reversible tyre, particulary for bicycles, with two treads**

(71) Applicant: Vittoria S.p.A., 24040 Madone (Bergamo) (IT)
(72) Inventor: Campagne, Adrien Jules Hubert Rudie, 24040 Madone (BG) (IT)
(74) Representative: Perani, Aurelio

(57) **Abstract**

Tyre, particularly for bicycles, comprising a casing (1) provided with a tread (8) and walls (2, 3) terminating in corresponding beads (4, 5) each of which incorporates corresponding reinforcing rings (6, 7) for mounting on the rim of a bicycle wheel.

The tyre includes a further tread (9) attached to the casing (1) opposite the first tread (8), each of the said beads (4, 5) being constructed in a symmetrical position with respect to the median plane (P) of the corresponding wall (2, 3) so that the tyre can be fitted to the rim of the bicycle wheel in a reversed position for use of the said further tread (9).

## Description

This invention relates to a tyre, particularly for bicycles, comprising a casing provided with tread and walls ending in corresponding beads each of which incorporates corresponding reinforcing rings.

Tyres of the abovementioned type are known in the art.

They are manufactured with tread comprising mixtures of natural rubber or mixtures of synthetic elastomers with or without the additions of quantities of natural and/or artificial rubber which vary depending upon the particular conditions in which the tyre is used.

A tyre may in fact be intended for ordinary riding bicycles or special bicycles for road or track competitions.

When used on the road it is known that the ground conditions require that an appropriate tread be used depending upon whether the ground is wet or dry, or whether it is tarmac or dirt and so on.

In accordance with the known art, as the ground conditions vary it is then necessary to replace tyres on the wheels having a tread of one type by others having a tread of a different type.

This means that the cyclist has to carry with him at least one tyre having a different type of tread, for example one for wet ground if the one fitted is for dry ground, or vice versa.

A similar disadvantage also arises when the tread is substantially completely worn, so that the tyre has to be replaced with another with a new tread even if it is of the same type as the previous one.

The object of this invention is to overcome the situations mentioned above by providing a tyre which can be reused to replace a worn tyre or which is alternatively suitable for two different conditions of use.

This object is achieved through a tyre, particularly for bicycles, characterised in accordance with claim 1 below.

The invention will now be more particularly described with reference to an embodiment provided purely by way of indication and without restriction, illustrated in the appended drawings in which:
- Figure 1 shows diagrammatically a transverse cross-section through a tyre according to the invention,
- Figure 2 shows a cross-section of an enlarged scale of a bicycle wheel rim with a tyre according to the invention fitted thereupon in a position in which its tread is in use.

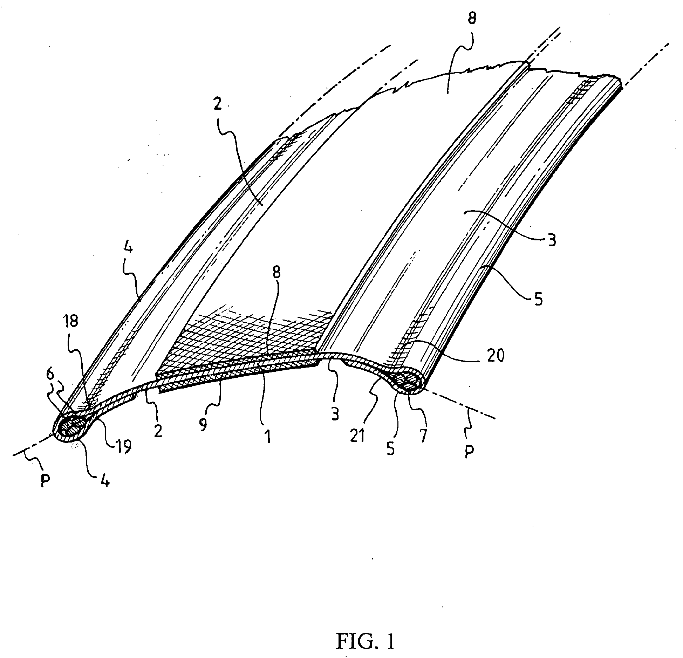

With reference to the abovementioned figures 1 indicates the casing of the tyre. This comprises walls 2 and 3 which end in corresponding beads 4 and 5.

The beads are provided with corresponding reinforcing rings indicated by 6 in the case of bead 4 and 7 in the case of bead 5.

In the example illustrated rings 6 and 7 are three in number for each bead, but as an alternative they may be present in a greater number, or as just one.

With reference to Figure 1 it will be seen that beads 4 and 5 are constructed to be in a symmetrical position with respect to the median plane P of each wall 2 and 3.

Casing 1, according to the invention, is provided with a tread 8 and a further tread 9 on the opposite side.

Treads 8 and 9 may both be constructed using the same natural and/or synthetic rubber composition, or one tread may be constructed using a different mixture from that used to construct the opposite tread.

Similarly both the treads may have the same patterns with the same design and function or may have different patterns intended for different behaviour on the ground.

It should be pointed out that casing 1 and corresponding walls 2 and 3 are manufactured with a textile base or reinforcing structure comprising aramide fibres and "polycotton" fibres, that is fibres whose core is of polyester and whose coating is of cotton, with the result that they are flexible even though they are impregnated with elastomers in the conventional way.

Treads 8 and 9 are in turn fixed to casing 1 through bonding, avoiding vulcanisation stages which could stiffen the tyre.

The tyre is therefore flexible and reversible so that it can be mounted on a wheel rim with tread 8 facing outwards, or, as an alternative, after the rim has been removed, reversed and again fitted onto the rim with tread 9 facing outwards in a position of use.

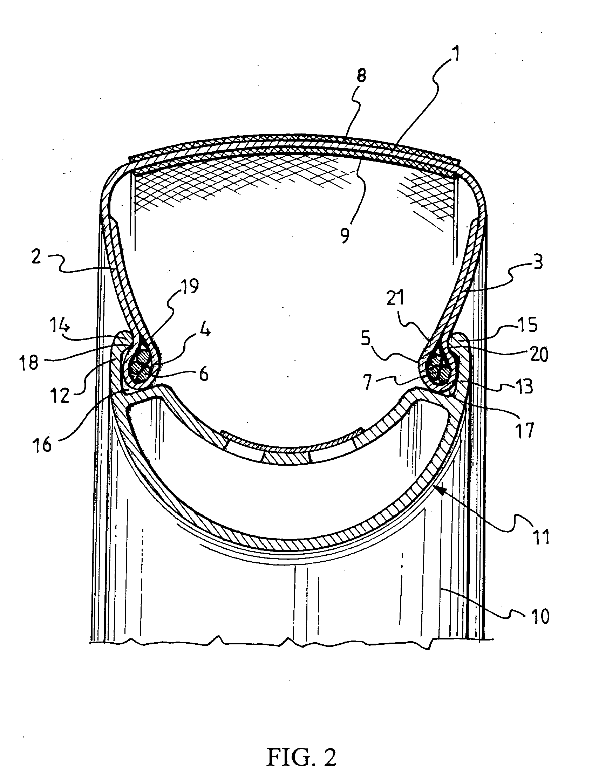

With reference to Figure 2 it will be noted that a conventional bicycle wheel rim 10, particularly of the competition type, comprises a base structure indicated as a whole by 11 which bears appendages 12 and 13 at its extremities.

These are provided with ribs 14 and 15 respectively which, being located at the extremities and facing inwards towards the rim, form substantial grooves 16 and 17.

These grooves engage beads 4 and 5 of the tyre which, being symmetrically positioned with respect to the median plane P of walls 2 and 3, anchor the tyre on the rim either in the position with tread 8 facing outwards or in the reversed position with tread 9 facing outwards.

According to a further aspect of the invention, walls 2 and 3 of the tyre are also provided with corresponding recesses 18, 19 and 20, 21 located on opposite sides close to beads 4 and 5.

These recesses help to anchor the tyre to rim 10 with greater efficiency in that they engage extremities 14 and 15 of appendages 12 and 13 in both positions of the tyre.

Dimensions and materials may be of any kind without going beyond the scope of protection of the invention as described above and claimed below.

## Claims

1. Tyre, particularly for bicycles, comprising a casing (1) having a tread (8) and walls (2, 3) terminating in corresponding beads (4, 5) each of which incorporate corresponding reinforcing rings (6, 7) for mounting on the rim (10) of a bicycle wheel, **characterised in that** it includes a further tread (9) attached to the casing (1) on the side opposite the first tread (8), each of the said beads (4, 5) being constructed in a symmetrical position with respect to the median plane (P) of the corresponding wall (2, 3) so that the tyre can be fitted to the rim (10) of the bicycle wheel in a reversed position for use of the said further tread (9).

2. Tyre according to claim 1, **characterised in that** the said casing (1) is flexible and is constructed with a reinforcement of fabric comprising aramide fibres and polyester fibres with a coating of cotton.

3. Tyre according to claims 1 and 2, **characterised in that** the said first (8) and the said further tread (9) are both fixed to the casing (1) by adhesive bonding.

4. Tyre according to claims 1 to 3, **characterised in that** the said further tread (9) is comprised of a mixture different from that of which the other tread (8) is comprised.

5. Tyre according to claims 1 to 4, **characterised in that** the said further tread (9) is provided with a pattern having a different configuration and function from that borne by the other tread (8).

6. Tyre according to claims 1 to 5, **characterised in that** each wall (2, 3) of the casing (1) is provided with recesses (18, 19, 20, 21) positioned close to the corresponding bead (4, 5), these beads being located on opposite sides of the corresponding wall (2, 3) and extending parallel to the beads (4, 5).
